# EUROPÄISCHE PATENTANMELDUNG

(11) **EP 3 564 554 A1**
(43) Veröffentlichungstag der Anmeldung: **06.11.2019**
(21) Anmeldenummer: 19172302.2
(22) Anmeldetag: 02.05.2019
(51) Int. Cl.: F16F 9/18, F16F 9/342, F16F 9/348, F16F 9/44, F16F 9/46, B62K 25/06

(54) **STOSSDÄMPFER FÜR EIN FAHRRAD**

(30) Priorität: 02.05.2018 DE 102018110490
(71) Anmelder: DT Swiss AG, 2504 Biel (CH)
(72) Erfinder: Walthert, Martin, CH-3270 Aarberg (CH); Richter, Karsten, CH-2502 Biel (CH); Zbinden, Samuel, CH-2503 Biel (CH)
(74) Vertreter: BSB Patentanwälte Schütte & Engelen Partnerschaft mbB

(57) **Zusammenfassung**

Stoßdämpfer (50) für ein Fahrrad mit einem Dämpfungssystem (1), wobei das Dämpfungssystem (1) eine durch einen beweglichen Kolben (2) in eine erste Kammer (3) und in eine zweite Kammer (5) geteilte Dämpfungskammer (2) und eine Low-Speed-Drosseleinrichtung (30) für den Low-Speed-Bereich und eine High-Speed-Drosseleinrichtung (10) für den High-Speed-Bereich umfasst, wobei die High-Speed-Drosseleinrichtung (10) ein über eine Federeinrichtung (11) in eine Schließstellung (12) vorbelastetes Drosselventil (13) umfasst. Es ist ein effektiver Strömungsquerschnitt (14) für die High-Speed-Drosseleinrichtung (10) einstellbar.

## Beschreibung

Die vorliegende Erfindung betrifft einen Stoßdämpfer für ein wenigstens teilweise muskelbetriebenes Zweirad und insbesondere ein Fahrrad mit wenigstens einem Dämpfungssystem. Ein derartiger Stoßdämpfer kann nicht nur in konventionellen Zweirädern und Fahrrädern eingesetzt werden, sondern auch an Fahrrädern, die wenigstens zum Teil durch beispielsweise einen Elektromotor unterstützt werden. Besonders bevorzugt wird die Erfindung an sportlichen Fahrrädern eingesetzt.

Im Stand der Technik sind High-End-Feder-Dämpferelemente für das Vorderrad und das Hinterrad bekannt geworden, wobei meistens mindestens zwei unterschiedliche Durchflusskanäle für die Einfederrichtung und die Ausfederrichtung vorgesehen sind. Das ist zum einen der sogenannte Low-Speed-Kanal und zum andern der High-Speed-Kanal für die Low-Speed-Dämpfung und für die High-Speed-Dämpfung. Der Low-Speed-Kanal und der High-Speed-Kanal stellen den Hauptanteil des Durchflussquerschnitts im normalen Betrieb zur Verfügung. Das bedeutet, dass bei langsamen und schnellen Bewegungen das Dämpfungsfluid durch diese Kanäle fließt.

In einfachen Fällen ist der Low-Speed-Kanal eine einfache Bohrung und der High-Speed-Kanal ist zum Beispiel von einem Shim bzw. einem Federplättchen versperrt, welches ein Einwegventil bildet und erst ab einem gewissen Öffnungsdruck den Kanal freigibt und ein Durchfluss ermöglicht. Das führt zu einer typischen Dämpfungskurve mit parabelförmigem Verlauf im Low-Speed-Bereich. Er schließt sich ein Knick im Übergang zwischen dem Low-Speed-Bereich und dem High-Speed-Bereich an. Danach verläuft die Kurve nach dem Öffnen des High-Speed-Kanals abgeflacht.

Die komplexeren Stoßdämpfer, die heutzutage auf dem Markt zur Verfügung stehen, besitzen eine verstellbare Low-Speed-Dämpfung und/oder High-Speed-Dämpfung in Ein- und/oder Ausfederrichtung. Dabei kann eine Einstellung von außerhalb des Dämpfers über externe Bedienelemente möglich sein. Oder es ist eine Einstellung nur durch Demontage im Inneren des Dämpfers möglich.

Eine Verstellung der Low-Speed-Dämpfung wird typischerweise durch das Verändern des Durchflussquerschnittes der Bohrung erreicht. Eine solche Verstellung bewirkt eine unterschiedliche Steigung im Low-Speed-Bereich.

Falls auch eine Verstellung der High-Speed-Dämpfung von extern möglich ist, so wird dies über eine veränderbare Vorspannung des Shims bzw. Federpäckchens oder Deckelements über dem High-Speed-Kanal realisiert. Das führt dazu, dass ein unterschiedlicher Öffnungsdruck erforderlich ist, bis der Durchfluss durch den High-Speed-Kanal freigegeben wird. Als Folge ergibt sich, dass sich der Knickpunkt verschiebt, die Kurve aber im Wesentlichen parallel verlaufen.

Es ist deshalb die Aufgabe der vorliegenden Erfindung, einen Stoßdämpfer zur Verfügung zu stellen, bei welchem im High-Speed-Bereich eine bessere Einstellungsmöglichkeit zur Verfügung steht. Insbesondere soll bei einer Verstellung der Dämpfung im High-Speed-Bereich keine Verschiebung des Knickpunkts als Übergang vom Low-Speed-Bereich zum High-Speed-Bereich bewirkt werden.

Diese Aufgabe wird gelöst durch einen Stoßdämpfer mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Ein erfindungsgemäßer Stoßdämpfer ist für ein wenigstens teilweise muskelbetriebenes Zweirad und insbesondere Fahrrad vorgesehen und umfasst wenigstens ein Dämpfungssystem, wobei das Dämpfungssystem wenigstens eine durch einen beweglichen Kolben in eine erste Kammer und in eine zweite Kammer geteilte Dämpfungskammer und wenigstens eine Low-Speed-Drosseleinrichtung für den Low-Speed-Bereich und wenigstens eine High-Speed-Drosseleinrichtung für den High-Speed-Bereich umfasst. Dabei weist die High-Speed-Drosseleinrichtung wenigstens ein über eine Federeinrichtung in eine Schließstellung vorbelastetes Drosselventil auf. Es ist wenigstens ein effektiver Strömungsquerschnitt für die High-Speed-Drosseleinrichtung einstellbar.

Der erfindungsgemäße Stoßdämpfer hat viele Vorteile. Durch eine Änderung des effektiv wirksamen Strömungsquerschnitts wird direkt die Steigung der Dämpferkurve beeinflusst, sodass eine effektive Einstellung und Änderung der Eigenschaften im High-Speed-Bereich erreicht wird. Das Drosselventil weist eine andere Charakteristik auf, wobei die Dämpfungskennlinie je nach Änderung flacher oder steiler verläuft. Grundsätzlich bleibt der Knickpunkt zwischen Low-Speed-Bereich und dem High-Speed-Bereich aber an der gleichen Stelle.

Unter dem Begriff "Drosselventil" wird ohne einen weiteren Zusatz in der vorliegenden Anmeldung immer ein bzw. das Drosselventil der High-Speed-Drosseleinrichtung verstanden, sofern nicht explizit ein anderer Einsatzzweck angegeben ist. Insofern kann der Begriff "Drosselventil" allein durchgängig in dieser Anmeldung auch durch den Begriff "High-Speed-Drosselventil" ersetzt werden. Grundsätzlich kann zwar auch wenigstens ein Low-Speed-Drosselventil umfasst sein, aber dann wird immer der präzisierende Zusatz "Low-Speed" oder dergleichen verwendet.

Vorzugsweise sind wenigstens drei unterschiedliche effektive Strömungsquerschnitte der High-Speed-Drosseleinrichtung einstellbar. Es ist möglich und bevorzugt, dass der effektive Strömungsquerschnitt des Drosselventils der High-Speed-Drosseleinrichtung kontinuierlich einstellbar ist. Es ist auch möglich, dass der effektive Strömungsquerschnitt stufenweise oder diskret einstellbar ist. Insbesondere kann der effektive Strömungsquerschnitt in wenigstens drei, vier oder fünf oder mehr Positionen unterschiedlich groß eingestellt werden.

Möglich und bevorzugt ist auch eine kombinierte stufenweise und kontinuierliche Einstellbarkeit der High-Speed-Drosseleinrichtung. Beispielsweise können (Teil-)Kanäle der High-Speed-Drosseleinrichtung jeweils teilweise oder ganz verschlossen werden.

In einer bevorzugten Weiterbildung weist die High-Speed-Drosseleinrichtung einen einstellbaren Strömungsquerschnitt an wenigstens einem Strömungskanal auf. Dabei ist es möglich, dass mehrere Strömungskanäle vorgesehen sind und dass nur der Strömungsquerschnitt eines Strömungskanals (oder mehrerer Strömungskanäle) verändert wird. Es ist nicht nötig, dass der Strömungsquerschnitt von allen Strömungskanälen verändert werden muss. Wesentlich ist, dass der insgesamt zur Verfügung stehende effektive Strömungsquerschnitt einstellbar ist.

In vorteilhaften Ausgestaltungen ist der freie Strömungsquerschnitt durch wenigstens eine bewegbare und und/oder einstellbare Einstelleinheit einstellbar. Dabei ist es in einfachen Ausgestaltungen möglich, dass beispielsweise ein axial bewegbares Lanzenteil vorgesehen ist, welches beispielsweise am vorderen Ende spitz zuläuft und in eine Bohrung eingeführt wird, sodass der effektiv zu Verfügung stehende Querschnitt durch die (axiale) Position des Lanzenteils beeinflusst wird. Möglich ist es auch, dass die Einstelleinheit wenigstens einen quer zu dem Strömungskanal verstellbaren Stellkörper aufweist. Beispielsweise ist es möglich, dass der freie Strömungsquerschnitt durch einen z. B. seitlich in den Strömungskanal hineinragenden Stellkörper begrenzt oder verringert wird.

Durch eine Verstellung des Stellkörpers kann in anderen Ausgestaltungen gleichzeitig oder auch unabhängig von der Einstellung des Strömungsquerschnittes auch die Federkonstante eines Shim-Ventils verändert werden. Der Strömungswiderstand an dem Strömungskanal wird dadurch erhöht oder verkleinert. Der Strömungskanal selbst muss dann nicht immer durch den Stellkörper direkt verändert werden.

Vorzugsweise ist der freie Strömungsquerschnitt wenigstens zum Teil an einem einstellbaren Strömungsventil ausgebildet, welches wenigstens einen Strömungskanal umfasst. Es ist möglich und bevorzugt, dass eine Mehrzahl an Strömungskanälen vorgesehen ist und dass wenigstens ein Strömungskanal durch den Stellkörper wenigstens teilweise abdeckbar ist. In solchen Ausgestaltungen, in denen wenigstens ein Strömungskanal wenigstens teilweise abdeckbar ist, kann der Stellkörper als Verschlusswandung ausgebildet sein. Es ist möglich, dass in unterschiedlichen Positionen ein variabler Teil der Mehrzahl an Strömungskanälen ganz oder teilweise abgedeckt wird.

In vorteilhaften Weiterbildungen ist eine Federkraft der Federeinrichtung des Drosselventils veränderbar. Dann ist es nicht nur möglich, die Federkonstante zu verändern, sondern es kann zusätzlich auch die aufgebrachte Federkraft verändert werden.

In allen Ausgestaltungen ist es möglich, dass das durch eine Federkraft vorbelastete Drosselventil in Reihe oder parallel zu dem Strömungsventil angeordnet ist. Vorzugsweise ist das Drosselventil als Shim-Ventil ausgebildet und umfasst wenigstens eine Shimeinheit. Ein Shim-Ventil kann ein Shim oder mehrere Shims bzw. Federplättchen umfassen. Vorzugsweise wirkt die Federeinrichtung auf wenigstens eine Shimeinheit des Shim-Ventils.

Es ist besonders bevorzugt, dass die Federeinrichtung exzentrisch an der Shimeinheit angeordnet ist und durch eine Relativbewegung relativ zu der Shimeinheit eine Federkonstante änderbar ist. Dann kann die Federeinrichtung oder ein Teil davon als Stellkörper dienen.

Beispielsweise ist eine Linearführung möglich, bei der ein Bauteil als Stellkörper auf der Shimeinheit wenigstens teilweise aufliegt. Die Shimeinheit bildet selbst eine Feder, die sich durch den Strömungsfluss des Dämpfungsfluids verbiegt. Liegt nun auf der Shimeinheit ein (linear oder anders) bewegbarer Stellkörper auf, so wird mit der Verstellung des Stellkörpers die Federkonstante des Systems verändert.

Ein Stellkörper kann z. B. als Stellnadel ausgebildet sein und einen freien Strömungsquerschnitt eines Strömungskanals verändern oder aber kann z. B. als Verschlusswandung ausgebildet sein und direkt (mittelbar oder unmittelbar) einen freien Strömungsquerschnitt eines Strömungskanals verändern oder kann auch über eine Bewegung z. B. eine Federkonstante einer Federeinrichtung beeinflussen.

Besonders bevorzugt ist die Federeinrichtung um eine exzentrische Achse schwenkbar an der Shimeinheit angeordnet. Beispielsweise kann ein Stellkörper exzentrisch an der Shimeinheit schwenkbar aufgenommen sein. Die Shimeinheit kann beispielsweise durch ein rundes Plättchen gebildet sein, welches (zentral) in der Mitte befestigt ist. In einem äußeren Bereich befindet sich der Strömungskanal. Durch eine Winkelausrichtung eines Stellkörpers der Federeinrichtung wird somit die Federkonstante des Systems verändert und somit kann die Dämpferkennlinie des Stoßdämpfers eingestellt und verändert werden. In einer einfachen Ausgestaltung wird die Auflagefläche des Stellkörpers auf der Shimeinheit durch eine gezielte Bewegung vergrössert oder verkleinert und damit die Federkonstante gezielt beeinflusst.

In bevorzugten Weiterbildungen sind das Drosselventil und/oder das Strömungsventil vorzugsweise innerhalb eines Dämpfergehäuses des Dämpfungssystems angeordnet. Es ist aber auch möglich, dass das Drosselventil und/oder das Strömungsventil außerhalb des Dämpfergehäuses des Dämpfungssystems angeordnet sind.

Vorzugsweise enthält das Dämpfungssystem ein ein konventionelles Öl als Dämpfungsfluid oder ein anderes Medium. Möglich ist es aber auch, dass der Stoßdämpfer bzw. das Dämpfungssystem ein magnetorheologisches Fluid enthält und über ein Magnetfeld steuerbar ist.

In allen Ausgestaltungen ist es bevorzugt, dass die Low-Speed-Drosseleinrichtung einstellbar ist. In vorteilhaften Ausgestaltungen sind die Low-Speed-Drosseleinrichtung und die High-Speed-Drosseleinrichtung vorzugsweise beide einstellbar. Die Low-Speed-Drosseleinrichtung und die High-Speed-Drosseleinrichtung können gemeinsam und gleichzeitig einstellbar sein. Dann können durch einen gemeinsamen Aktor beide Drosseleinrichtungen gleichzeitig eingestellt bzw. justiert werden. Vorzugsweise sind die Low-Speed-Drosseleinrichtung und die High-Speed-Drosseleinrichtung aber über separate Aktoren getrennt voneinander einstellbar.

In allen Ausgestaltungen ist es bevorzugt, dass Low-Speed-Drosseleinrichtungen und High-Speed-Drosseleinrichtungen für die Druckstufe und die Zugstufe vorgesehen sind.

Insgesamt ermöglicht die Erfindung das Verstellen der Dämpfungseigenschaften eines Stoßdämpfers von extern und/oder intern. Es wird eine Verstellung im High-Speed-Bereich ermöglicht, die in der Druckstufe oder Zugstufe eingesetzt werden kann. Es wird keine oder praktisch keine Verschiebung des Knickpunkts am Übergang vom Low-Speed-Bereich zum High-Speed-Bereich bewirkt.

Die Erfindung ermöglicht beispielsweise in der Ausfederrichtung erheblich verbesserte Einstellmöglichkeiten gegenüber dem bisherigen Stand der Technik. Bislang können konventionelle Öldämpfer praktisch nur für einen bestimmten Federungskraftverlauf optimal eingestellt werden. Bei einem anderen Federungskraftverlauf, wie es zum Beispiel durch das Anpassen der Federkennlinie auf ein anderes Fahrergewicht erforderlich ist, ist aber ein gleiches Ausfederverhalten trotz Verstellung nicht ohne Weiteres möglich. Die Dämpfung ist im High-Speed-Bereich zu schwach und im Bereich des Übergangspunktes am Knick zu stark.

In Einfederrichtung bewirkt das bisherige bekannte Verstellsystem eine Verstellung des "Plattform"-Effekts. Wenn ein Fahrer zum Beispiel die Dämpfungskraft bei großen Sprüngen erhöhen will, dann hat die zusätzliche Dämpfungskraft oft einen zu kleinen Effekt oder führt zu einer unerwünscht großen Straffheit im Übergangsbereich zwischen dem Low-Speed-Bereich und dem High-Speed-Bereich, was sich in anderen Fahrsituationen negativ auswirkt.

Die Erfindung ermöglicht die Einstellung des Durchflussquerschnitts des High-Speed-Kanals durch ein geeignetes Verstellelement wie eine Einstelleinheit und/oder einen Stellkörper.

Die Verstellung kann intern oder extern erfolgen. Der Low-Speed-Kanal wird nicht verstellt, sondern allein der High-Speed-Kanal. Es ist aber möglich, dass die Kanäle für Low-Speed und High-Speed über die gleiche Einstelleinheit gemeinsam verstellt bzw. gedrosselt werden.

Es ist möglich, dass das Dämpfungsfluid zuerst durch den Strömungskanal mit der High-Speed-Einstelleinheit gedrosselt wird und anschließend durch die Drosselungsstelle des Low-Speed-Kanals fließt. Beispielsweise kann eine Verstellnadel als Einstelleinheit einen freien Strömungsquerschnitt des High-Speed-Strömungskanals beeinflussen. Es ergibt sich ein deutlich grösserer Einflusseffekt bei maximalen Geschwindigkeiten, ohne den Knickpunkt zu verschieben. Die Kennlinienverläufe sind parabelförmig, da die Drosselung durch z. B. eine Bohrung erfolgt. Dabei steigt die Kraft nicht linear mit der Geschwindigkeit an.

Die Veränderung des Durchflussquerschnitts kann auch kontinuierlich oder quasi kontinuierlich durch das Verschließen von mehreren einzelnen Bohrungen erreicht werden. Bei Einsatz eines Shim-Ventils ist der entscheidende Durchflussquerschnitt der Spalt unter dem Shim, welche durch einen einstellbaren maximalen Durchbiegeweg des Shims bzw. der Shimeinheit erreicht wird.

Alternativ oder zusätzlich kann die Verstellung der Federkonstante der Vorspanneinrichtung der Abdeckung der High-Speed-Strömungskanäle möglich sein.

In einer alternativen Variante ist ein anderer erfindungsgemäßer Stoßdämpfer für ein wenigstens teilweise muskelbetriebenes Zweirad und insbesondere Fahrrad vorgesehen und umfasst wenigstens ein Dämpfungssystem, wobei das Dämpfungssystem wenigstens eine durch einen beweglichen Kolben in eine erste Kammer und in eine zweite Kammer geteilte Dämpfungskammer und wenigstens eine Low-Speed-Drosseleinrichtung für den Low-Speed-Bereich und wenigstens eine High-Speed-Drosseleinrichtung für den High-Speed-Bereich umfasst. Dabei weist die High-Speed-Drosseleinrichtung wenigstens ein über eine Federeinrichtung in eine Schließstellung vorbelastetes Drosselventil auf. Es ist eine Federkonstante der Federeinrichtung des Drosselventils veränderbar (und somit für die High-Speed-Drosseleinrichtung einstellbar). Für einen solchen Stoßdämpfer behält sich die Anmelderin vor Schutz zu beantragen.

Dieser Stoßdämpfer hat viele Vorteile. Ein erheblicher Vorteil besteht darin, dass beispielsweise die Federkonstante der Federeinrichtung, die das Drosselventil in die Schließstellung vorbelastet, einstellbar ist. Wenn die Federkonstante verändert wird, so ändert sich bei gleichem Weg die aufgebrachte Kraft bzw. durch eine Veränderung der Federkonstante wird die komplette Kennlinie der Feder verändert. Das Drosselventil weist eine andere Charakteristik auf, wobei die Dämpfungskennlinie je nach Änderung der Federkonstante flacher oder steiler verläuft. Grundsätzlich bleibt der Knickpunkt zwischen Low-Speed-Bereich und dem High-Speed-Bereich aber an der gleichen Stelle. In weiterbildungen kann ein solcher Stoßdämpfer ein Merkmal oder mehrere Merkmale wie zuvor beschrieben aufweisen. Insbesondere ist es auch möglich, dass an einem solchen Stoßdämpfer ein effektiver Strömungsquerschnitt eines Drosselventils für die High-Speed-Drosseleinrichtung einstellbar ist.

Insgesamt bietet die Erfindung deutlich größere Effekte bei maximalen Geschwindigkeiten bei gleichzeitig nur minimalen Verschiebungen des Knickpunktes. Die Öffnung des Drosselventils erlaubt einen linearen Verlauf der Kraft-Geschwindigkeit-Kennlinie.

Dabei kann beispielsweise ein Exzenter als Stellkörper die lokale Federrate bzw. Federkonstante eines Shim-Ventils ändern. Durch eine größere oder geringere Abstützung der Oberfläche einer Shimeinheit wird die Federrate effektiv beeinflusst.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine schematische Darstellung eines Mountainbikes;
- Figur 2: eine schematische Darstellung eines Stoßdämpfers gemäß der Erfindung;
- Figur 3: eine Einstellmöglichkeit zur Einstellung eines Strömungsventils des Dämpfungssystems nach Figur 2;
- Figur 4: eine Draufsicht auf ein Drosselventil des Stoßdämpfers nach Figur 2;
- Figur 5: eine geschnittene Seitenansicht des Drosselventils nach Figur 4; und
- Figur 6: eine Ansicht von unten auf ein alternatives Drosselventil des Stoßdämpfers nach Figur 2;
- Figur 7: verschiedene Kennlinien.

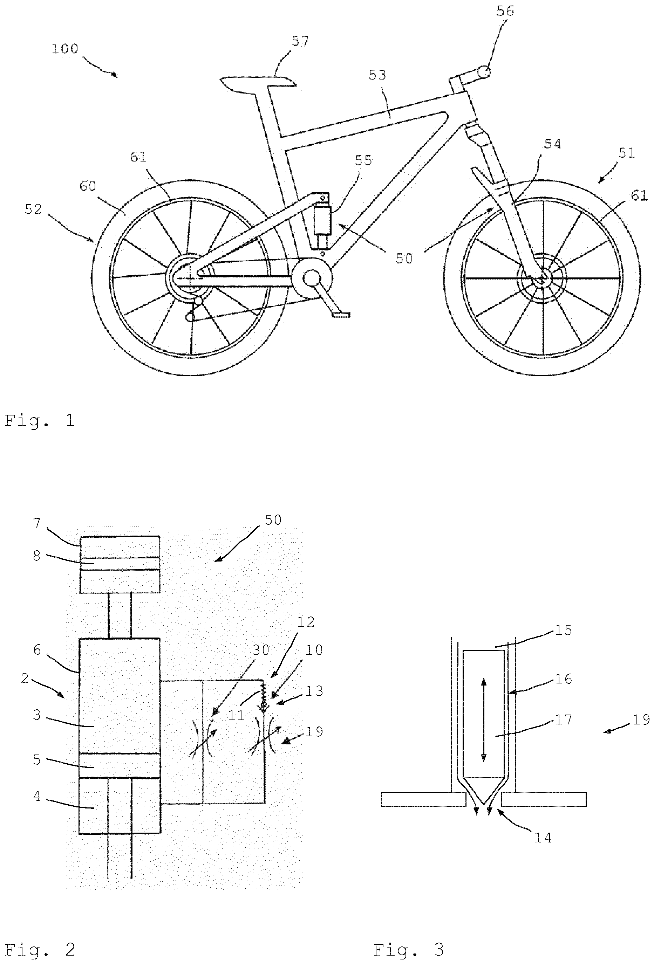

In Figur 1 ist ein Fahrrad 100 in einer stark schematischen Seitenansicht abgebildet, welches hier als Mountainbike ausgeführt ist. Das Fahrrad 100 ist wenigstens teilweise muskelbetrieben und kann über einen elektrischen Hilfsantrieb verfügen.

Das Mountainbike bzw. Fahrrad 100 verfügt über ein Vorderrad 51 und ein Hinterrad 52, die jeweils über Felgen 61 verfügen. Auf den Felgen sind Reifen 60 montiert. Des weiteren umfasst das Fahrrad 100 einen Rahmen 53, eine gefederte Vordergabel 54 und einen Hinterraddämpfer 55.

Figur 2 zeigt eine stark schematische Ansicht eines Stoßdämpfers 50 für das Fahrrad 100 aus Figur 1. Dabei kann der Stoßdämpfer 50 sowohl als Vorderradgabel oder auch als Hinterraddämpfer ausgebildet sein.

Hier umfasst das Dämpfungssystem 1 ein Dämpfergehäuse 6, in dem eine Dämpfungskammer 2 angeordnet ist, die durch einen beweglichen Kolben 5 in eine erste Kammer 3 und eine zweite Kammer 4 aufgeteilt wird. Zum Ausgleich des eintauchenden Volumens der Kolbenstange ist hier eine Ausgleichskammer 7 mit einem Trennkolben 8 vorgesehen.

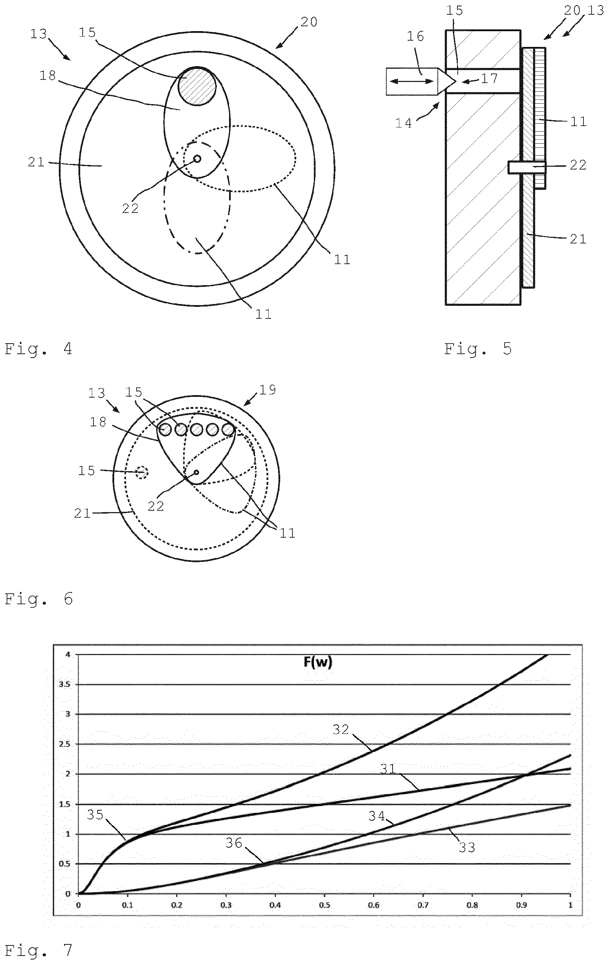

Die erste Kammer 3 und die zweite Kammer 4 sind hier zur besseren Übersicht über extern dargestellte Strömungskanäle miteinander verbunden. Möglich ist es aber auch, dass externe und/oder interne Strömungskanäle vorgesehen sind. Grundsätzlich können Strömungskanäle auch intern im Kolben untergebracht sein, wie es z. B. Fig. 6 darstellt.

Es ist in dem Strömungsweg wenigstens eine Low-Speed-Drosseleinrichtung 30 und es ist eine High-Speed-Drosseleinrichtung 10 vorgesehen, die hier parallel geschaltet sind. Sowohl die Low-Speed-Drosseleinrichtung 30 als auch die High-Speed-Drosseleinrichtung 10 sind einstellbar.

Die High-Speed-Drosseleinrichtung 10 umfasst hier für dieselbe Strömungsrichtung zwei hintereinandergeschaltete Ventile, nämlich ein Drosselventil 13 und ein Strömungsventil 19, die hier beide einstellbar sein können.

Bei dem Strömungsventil 19 aus Figur 2 kann der wirksame Strömungsquerschnitt eingestellt werden, um darüber die Kennlinie im High-Speed-Bereich wunschgemäß zu verändern.

Das Drosselventil 13 ist hier als Einwegventil ausgebildet und umfasst ein Shim-Ventil 20 mit wenigstens einer Shimeinheit 21. Das Drosselventil 13 ist durch eine Federeinrichtung 11 in die Schließstellung vorbelastet.

Die Schließstellung 12 ist in Figur 2 dargestellt. Beispielsweise verschließt eine durch eine Federeinrichtung 11 vorbelastete Kugel einen Durchflusskanal. Andere Drosselventile wie Shim-Ventile etc. sind auch möglich.

Figur 3 zeigt eine schematische Konstruktionsmöglichkeit für das Strömungsventil 19 aus Figur 2. Dabei ist ein Strömungskanal 15 vorgesehen, in dem eine Einstelleinheit 16 in axialer Richtung verstellbar angeordnet ist. Die Einstelleinheit 16 ist hier als eine Art von Lanzenteil 17 ausgebildet und weist am vorderen Ende ein spitz zulaufendes Teil auf, welches hier teilweise in eine Öffnung einer Wandung hineinragt und somit nur noch einen Teil des möglichen Strömungsquerschnitts 14 zur Verfügung stellt. Wird die Einstelleinheit 16 weiter in die Öffnung eingefahren, so verringert sich der verbleibende Strömungsquerschnitt und umgekehrt. Über eine solche Ausgestaltung kann auf effektive Art und Weise die High-Speed-Kennlinie angepasst und eingestellt werden.

In den Figuren 4 und 5 ist eine schematische Darstellung eines Drosselventils 13 wiedergegeben, wobei Figur 4 eine Draufsicht und Figur 5 eine geschnittene Seitenansicht zeigt.

Das Drosselventil 13 umfasst ein Shim-Ventil und verfügt über eine Shimeinheit 21. Die Shimeinheit 21 ist hier als kreisrundes Federplättchen ausgeführt und zentral an der Achse 22 fixiert. Die Shimeinheit 21 deckt deshalb auch den schraffiert dargestellten Strömungskanal 15 ab, sodass von unten durch den Strömungskanal 15 Dämpfungsfluid nur dann nach oben austreten kann, wenn die Federkraft des Shim-Ventils überwunden wird.

In Figur ist erkennbar, dass in dem Strömungskanal 15 eine Einstelleinheit 16 bzw. ein Lanzenteil 17 in axialer Richtung verstellbar angeordnet ist. Das Lanzenteil 17 ragt in die Öffnung hinein und stellt nur einen Teil des möglichen Strömungsquerschnitts 14 zur Verfügung. Wird die Einstelleinheit 16 weiter aus der Öffnung herausgefahren, so vergrößert sich der verbleibende Strömungsquerschnitt und umgekehrt. Hier kann der Strömungsquerschnitt und die Federrate bzw. Federsteifigkeit der Federeinrichtung 11 beeinflusst werden.

Figuren 4 und 5 zeigen das Shim-Ventil 20, welches in die Schließstellung 12 durch eine Federeinrichtung 11 vorbelastet ist. Die Federeinrichtung 11 setzt sich hier aus der Shimeinheit 21 und dem hier als Federeinrichtung 11 bezeichneten Plättchen zusammen. Die Federeinrichtung 11 weist hier wenigstens ein hier etwa ovales Plättchen als Stellkörper 18 auf, das bzw. die exzentrisch an der zentralen Achse 22 drehbar aufgenommen sind. Eine Verstellung des Drehwinkels des Stellkörpers 18 kann von außen erfolgen.

In der durchgezogen dargestellten Position überdeckt der auf der Shimeinheit 21 aufliegende Stellkörper 18 den Strömungskanal 15 praktisch vollständig. Dadurch wird die Federrate bzw. Federsteifigkeit der Federeinrichtung 11 im Bereich des Strömungskanals erheblich erhöht. Die Kennlinie wird erheblich steiler.

Punktiert eingezeichnet ist eine um 90° gedrehte Stellung. In dieser Stellung liegt der Stellkörper 18 nicht mehr direkt oberhalb des Strömungskanals 15 auf der Shimeinheit 21 auf. Aber dennoch wird die Federkonstante der Federeinrichtung 11 insgesamt im Bereich des Strömungskanals 15 verändert. Am schwächsten ist die Federkonstante der Federeinrichtung 11 eingestellt, wenn die Federeinrichtung 11 die strichpunktierte Lage einnimmt. Dort wird die Federkonstante der Shimeinheit am geringsten beeinflusst bzw. verstärkt. Die Kennlinie ist entsprechend flacher eingestellt.

Der entscheidende Durchflussquerschnitt ist der Spalt unter der Shimeinheit 21, welcher durch eine einstellbare maximale Durchbiegeweg der Shimeinheit 21 verstellt wird.

Figur 5 zeigt eine geschnittene schematische Seitenansicht der Darstellung nach Figur 4, wobei sich hier die Federeinrichtung 11 ebenfalls in der Position befindet, in der der auf der Shimeinheit 21 aufliegende Stellkörper 18 sich vollständig über den Strömungskanal 15 erstreckt. Dadurch wird eine besonders große Versteifung der Federkonstante des Systems der Federeinrichtung 11 aus Stellkörper 18 und Shim-Ventil 20 erreicht, sodass eine besonders große Kraft aufgewendet werden muss, um die Shimeinheit 21 entsprechend weit aufzubiegen.

Außerdem kann der effektive Strömungsquerschnitt durch eine Axialverstellung der Einstelleinheit 16 variiert werden. Es ist möglich, dass nur eine Einstellfunktion von beiden zur Verfügung steht.

Figur 6 zeigt eine schematische Darstellung eines alternativen Drosselventils 13, welches z. B. im Kolben realisiert sein kann.

Das Drosselventil 13 kann auch hier ein Shim-Ventil umfassen und über eine Shimeinheit 21 verfügen, die hier gestrichelt eingezeichnet ist, da sie z. B. am unteren Ende des Kolbens angebracht ist. Die Shimeinheit 21 kann hier als kreisrundes Federplättchen ausgeführt und zentral an der Achse 22 fixiert sein.

Die dargestellte Shimeinheit 21 deckt alle Strömungskanäle 15 ab, sodass hier in die Blattebene hinein durch die Strömungskanäle 15 Dämpfungsfluid nur dann nach unten austreten kann, wenn die Federkraft des Shim-Ventils überwunden wird.

Das Shim-Ventil 20 ist in die Schließstellung 12 durch eine nicht weiter dargestellte Federeinrichtung 11 vorbelastet. Die Federeinrichtung 11 kann in einfachen Fällen durch die Federkraft eines Federplättchen oder eines Stapels aus Federplättchen gebildet werden.

An dem Drosselventil 13 ist am hier oberen Ende der Strömungskanäle 15 ein hier drehbarer Stellkörper 18 angeordnet, der je nach Drehwinkel einen variablen Teil der Strömungskanäle 15 abdeckt. Der Stellkörper 18 ist exzentrisch an der zentralen Achse 22 drehbar aufgenommen. Eine Verstellung des Drehwinkels des Stellkörpers 18 kann auch hier wieder von außen erfolgen. In der in Fig. 6 durchgezogen dargestellten Stellung verschließt der Stellkörper 18 den Großteil der Strömungskanäle 15. Vorzugsweise verschließt der Stellkörper 18 nicht alle Strömungskanäle 15 komplett, damit das Shim-Paket noch aufgehen kann und die Dämpfung nicht unerwünscht hoch oder sogar "unendlich" hoch wird. Deshalb ist es möglich, dass wenigstens ein Strömungskanal 15 immer unverschlossen bleibt (hier der gestrichelt dargestellte Strömungskanal 15).

In der gestrichelt dargestellten Drehstellung des Stellkörpers 18 verschließt der Stellkörper 18 nur einen Teil der Strömungskanäle 15 und in der strichpunktiert dargestellten Drehstellung ist keiner der Strömungskanäle 15 durch den Stellkörper 18 abgedeckt. Dadurch ist eine effektive Veränderung des Strömungswiderstandes und des Durchflusswiderstandes der High-Speed-Drosseleinrichtung möglich.

Figur 7 zeigt das Ergebnis der Einstellmöglichkeiten der Erfindung anhand zweier grundsätzlich unterschiedlicher Dämpferkennlinien. Bei den Dämpferkennlinien mit dem Knickpunkt 35 ist ein relativ steiler Low-Speed-Bereich eingestellt, während die Dämpferkennlinien mit dem Knickpunkt 36 im Low-Speed-Bereich nur einen geringen Anstieg aufweisen.

Für die beiden Knickpunkte bzw. Übergänge 35 und 36 sind jeweils zwei Varianten 31 und 32 und 33 und 34 eingezeichnet. Es ist klar erkennbar, dass unterschiedliche Einstellungen für den High-Speed-Bereich praktisch keine Auswirkungen auf den Low-Speed-Bereich und auch praktisch keine Auswirkungen auf den Übergangs- oder Knickpunkt 35 bzw. 36 haben. Der flachere Verlauf der Dämpferkennlinie 31 verläuft erst ab dem Knickpunkt 35 flacher. Eine Verschiebung findet nicht statt.

Das Gleiche gilt für die beiden Dämpferkennlinien 33 und 34 die bis zu dem Knickpunkt 36 ebenfalls gleich verlaufen. Insgesamt stellt die Erfindung eine vorteilhafte Einstellmöglichkeit für den High-Speed-Bereich zur Verfügung, ohne unerwünschte Auswirkungen auf den Low-Speed-Bereich zu haben. Dabei ist eine Einstellung über eine Änderung des Durchflusses und bzw. oder der Federkennlinie und insbesondere der Federkonstante möglich.

**Bezugszeichenliste:**

| | | | |
|---|---|---|---|
| 1 | Dämpfungssystem | 52 | Hinterrad |
| 2 | Dämpfungskammer | 53 | Rahmen |
| 3 | erste Kammer | 54 | Gabel |
| 4 | zweite Kammer | 55 | Hinterraddämpfer |
| 5 | Kolben | 56 | Lenker |
| 6 | Dämpfergehäuse | 57 | Sattel |
| 7 | Ausgleichskammer | 58 | Batterie |
| 8 | Trennkolben | 59 | Speiche |
| 10 | High-Speed-Drosseleinrichtung | 60 | Reifen |
| | | 61 | Felge |
| 11 | Federeinrichtung | 100 | Fahrrad |
| 12 | Schliessstellung | | |
| 13 | Drosselventil | | |
| 14 | Strömungsquerschnitt | | |
| 15 | Strömungskanal | | |
| 16 | Einstelleinheit | | |
| 17 | Lanzenteil | | |
| 18 | Stellkörper | | |
| 19 | Strömungsventil | | |
| 20 | Shim-Ventil | | |
| 21 | Shimeinheit | | |
| 22 | Achse | | |
| 30 | Low-Speed-Drosseleinrichtung | | |
| 31 | Kurve | | |
| 32 | Kurve | | |
| 33 | Kurve | | |
| 34 | Kurve | | |
| 35 | Übergang | | |
| 36 | Übergang | | |
| 50 | Stoßdämpfer | | |
| 51 | Vorderrad | | |

## Patentansprüche

1. Stoßdämpfer (50) für ein wenigstens teilweise muskelbetriebenes Zweirad (100) und insbesondere Fahrrad mit wenigstens einem Dämpfungssystem (1), wobei das Dämpfungssystem (1) wenigstens eine durch einen beweglichen Kolben (2) in eine erste Kammer (3) und in eine zweite Kammer (5) geteilte Dämpfungskammer (2) und wenigstens eine Low-Speed-Drosseleinrichtung (30) für den Low-Speed-Bereich und wenigstens eine High-Speed-Drosseleinrichtung (10) für den High-Speed-Bereich umfasst, wobei die High-Speed-Drosseleinrichtung (10) wenigstens ein über eine Federeinrichtung (11) in eine Schliessstellung (12) vorbelastetes Drosselventil (13) umfasst,
**dadurch gekennzeichnet,**
**dass** wenigstens ein effektiver Strömungsquerschnitt (14) für die High-Speed-Drosseleinrichtung (10) einstellbar ist.

2. Stoßdämpfer nach Anspruch 1, wobei wenigstens drei unterschiedliche effektive Strömungsquerschnitte (14) der High-Speed-Drosseleinrichtung (10) einstellbar sind.

3. Stoßdämpfer nach Anspruch 1 oder 2, wobei die High-Speed-Drosseleinrichtung (10) einen einstellbaren Strömungsquerschnitt (14) an wenigstens einem Strömungskanal (15) aufweist.

4. Stoßdämpfer nach einem der vorhergehenden Ansprüche, wobei der freie Strömungsquerschnitt (14) durch eine bewegbare Einstelleinheit (16) einstellbar ist.

5. Stoßdämpfer nach dem vorhergehenden Anspruch, wobei die Einstelleinheit (16) ein axial bewegbares Lanzenteil (17) und/oder eine quer zu dem Strömungskanal (15) verstellbare Stellkörper (18) umfasst.

6. Stoßdämpfer nach einem der vorhergehenden Ansprüche, wobei der freie Strömungsquerschnitt (14) wenigstens zum Teil an einem einstellbaren Strömungsventil (19) ausgebildet ist, welches den wenigstens einen Strömungskanal (15) umfasst.

7. Stoßdämpfer nach den beiden vorhergehenden Ansprüchen, wobei eine Mehrzahl an Strömungskanälen vorgesehen ist und wenigstens ein Strömungskanal (15) durch den Stellkörper (18) wenigstens teilweise abdeckbar ist.

8. Stoßdämpfer nach wenigstens einem der vorhergehenden Ansprüche, wobei eine Federkonstante der Federeinrichtung (11) des Drosselventils (13) veränderbar ist und wobei eine Federkraft der Federeinrichtung (11) des Drosselventils (13) veränderbar ist und wobei insbesondere das federkraftbelastete Drosselventil (13) in Reihe oder parallel zu dem Strömungsventil (19) angeordnet ist.

9. Stoßdämpfer nach wenigstens einem der vorhergehenden Ansprüche, wobei das Drosselventil (13) als Shim-Ventil (20) ausgebildet ist und wenigstens eine Shimeinheit (21) umfasst und wobei die Federeinrichtung auf wenigstens eine Shimeinheit (21) des Shim-Ventils (20) einwirkt.

10. Stoßdämpfer nach wenigstens einem der vorhergehenden Ansprüche, wobei die Federeinrichtung (11) exzentrisch an einer Shimeinheit (21) angeordnet ist oder wobei die Federeinrichtung (11) um eine exzentrische Achse (22) schwenkbar an der Shimeinheit angeordnet (21) ist und wobei durch eine Relativbewegung relativ zu der Shimeinheit (21) eine Federkonstante änderbar ist.

11. Stoßdämpfer nach wenigstens einem der vorhergehenden Ansprüche, wobei das Drosselventil (13) und/oder das Strömungsventil (18) innerhalb eines Dämpfergehäuses (6) des Dämpfungssystems (1) angeordnet ist.

12. Stoßdämpfer nach wenigstens einem der vorhergehenden Ansprüche, wobei das Drosselventil (13) und/oder das Strömungsventil (18) außerhalb eines Dämpfergehäuses (6) des Dämpfungssystems (1) angeordnet ist.

13. Stoßdämpfer nach wenigstens einem der vorhergehenden Ansprüche, wobei das Dämpfungssystem (1) ein magnetorheologisches Fluid enthält und über ein Magnetfeld steuerbar ist.

14. Stoßdämpfer nach wenigstens einem der vorhergehenden Ansprüche, wobei die Low-Speed-Drosseleinrichtung (5) einstellbar ist und wobei insbesondere die Low-Speed-Drosseleinrichtung (5) gemeinsam mit der High-Speed-Drosseleinrichtung (10) einstellbar ist.

15. Stoßdämpfer nach wenigstens einem der vorhergehenden Ansprüche, wobei Low-Speed-Drosseleinrichtungen und High-Speed-Drosseleinrichtungen für die Druckstufe und die Zugstufe vorgesehen sind.
